# EUROPÄISCHE PATENTSCHRIFT

(11) **EP 3 032 037 B1**
(45) Veröffentlichungstag und Bekanntmachung des Hinweises auf die Patenterteilung: **03.10.2018**
(21) Anmeldenummer: 15190810.0
(22) Anmeldetag: 21.10.2015
(51) Int. Cl.: F01D 9/04, F01D 11/00, F01D 17/16, F01D 17/14

(54) **LEITSCHAUFELKRANZ UND STRÖMUNGSMASCHINE**
GUIDE VANE ASSEMBLY AND TURBO MACHINE
STATOR ET TURBOMACHINE

(30) Priorität: 25.11.2014 DE 102014223975
(43) Veröffentlichungstag der Anmeldung: 15.06.2016
(73) Patentinhaber: MTU Aero Engines AG, 80995 München (DE)
(72) Erfinder: HUMHAUSER, Werner, 85368 Moosburg (DE); KLINGELS, Hermann, 85221 Dachau (DE)

(56) Entgegenhaltungen:
- EP-A2- 1 524 412
- EP-A2- 1 586 744
- DE-A1-102006 024 085

## Beschreibung

Die Erfindung betrifft einen Leitschaufelkranz nach dem Oberbegriff des Patentanspruchs 1 sowie eine Strömungsmaschine.

Strömungsmaschinen wie Flugzeugtriebwerke haben zur Einstellung optimaler Betriebsbedingungen regelmäßig zumindest eine verdichterseitige verstellbare Leitschaufelreihe mit einer Vielzahl von um ihre Hochachse verschwenkbaren Leitschaufeln. Die Leitschaufelreihe bildet mit einem einen Rotorabschnitt umgreifenden Innenring einen Leitschaufelkranz. Der Innenring dient zur inneren Stabilisierung der Leitschaufeln. Eine radiale Lagerung der Laufschaufeln an sich erfolgt bei bekannten Leitschaufelkränzen über radial außenliegende Verstellzapfen der Leitschaufeln, die mit einer entsprechenden statorseitigen Verstelleinrichtung zusammenwirken. Diese Art der Lagerung wird auch speichenzentrierte Lagerung genannt. Die radial innere Stabilisierung erfolgt gewöhnlich über Lagerzapfen, die sich von einer Schaufelplattform radial nach innen erstrecken und in Lagerbuchsen des Innenrings geführt sind. Die Lagerzapfen stellen gleichzeitig einen Schutz vor Desintegrieren bei starken axialen Bewegungen des Innenrings relativ zu den Leitschaufeln dar, beispielswiese in Folge von sogenannten Pumpvorgängen oder eines Vogelschlags. Durch eine sehr enge Passung von Lagerzapfen und Lagerbuchse werden bei derartigen axialen Bewegungen hohe Kräfte auf die Leitschaufeln übertragen.

Leitschaufelkränze, die derartige Lagerzapfen zeigen, sind beispielsweise in der US 7,806,652 B2, US 6,984,105 B2, US 2005/0031238 A1, US 2009/0208338 A1 und in der US 7,713,022 B2 gezeigt.

Die EP 1586 744 A2 zeigt eine verstellbare Leitschaufelanordnung für eine Gasturbine mit einer verstellbaren Leitschaufel mit einer radial inneren Spindel und einer radial äußeren Spindel, wobei die radial inneren und äußeren Spindeln dafür konfiguriert sind, die Leitschaufeln in der Gasturbine drehbar zu befestigen. Die radial innere Spindel weist wenigstens eine darin definierte Nut auf und die wenigstens eine Nut weist wenigstens eine bearbeitete Fläche auf. Zudem hat die Leitschaufelanordnung einen Halter für einen Eingriff mit der wenigstens einen bearbeiteten Fläche, um die verstellbare Leitschaufel sicher in der Gasturbine zu befestigen. Der Halter ist dafür konfiguriert ist, an wenigstens zwei gegenüberliegenden Seiten der verstellbaren Leitschaufel anzuliegen, um den Verschleiß zu verringern. Des Weiteren hat die Leitschaufelanordnung eine sich in Umfangsrichtung um wenigstens einen Teil der radial inneren Spindel erstreckende Buchse, wobei die Buchse einen Körper und eine sich aus dem Körper erstreckende Basis aufweist, um eine Drehung der Buchse in Bezug auf die verstellbare Leitschaufel zu verhindern. Der Halter hat ein Paar von Halterarmen, die im Wesentlichen parallel sind und sich im Wesentlichen rechtwinklig aus einer Halterbasis erstrecken, wobei sich wenigstens ein Teil des Halters durch einen Teil der Buchse hindurch erstreckt und sich die Halterarme durch Schlitze in der Buchse erstrecken und mit der bearbeiteten Fläche der Nut in Eingriff stehen.

Die DE10 2006 024 085 A1 betrifft einen Turboverdichter in Axialbauweise für eine Gasturbine, insbesondere für ein Flugtriebwerk, mit einem beschaufelten Stator und einem beschaufelten Rotor. Der Stator umfasst ein an diametral gegenüberliegenden Seiten längsgeteiltes Verdichtergehäuse und mindestens einen Leitschaufelkranz mit verstellbaren Leitschaufeln, dessen Leitschaufeln radial außerhalb ihres Schaufelblatts am und/oder im Verdichtergehäuse sowie radial innerhalb ihres Schaufelblatts an und/oder in einem statorzugehörigen Innenring um radiale oder vorwiegend radiale Achsen schwenkbar gelagert sind. Der Innenring ist an mindestens zwei Stellen seines Umfangs geteilt und weist für jede Leitschaufel mindestens eine radial von innen in eine Öffnung einsetzbare Lagerbuchse auf.

Die EP 1 524 412 A2 zeigt eine Lagerung einer verstellbaren Leitschaufel einer Gasturbine, Die Leitschaufel ist in einem geteilten Innenring über einen inneren Zapfen gelagert, der in einer in eine Vertiefung des Innenrings eingesetzte Buchse geführt ist. Die Vertiefung hat in ihrem Boden einen Durchbruch, durch den der Zapfen mit einer Verjüngung geführt ist. Außerhalb der Vertiefung ist die Verjüngung tellerartig verdickt. Die Buchse ist zur Reibungsreduzierung mit einem Elektographit versehen.

Ebenso sind Leitschaufelkränze ohne Lagerzapfen bekannt. Diese Leitschaufelkränze ermöglichen eine sehr flache Bauweise des Innenrings, neigen jedoch zu einer Desintegration bei einer großen axialen Relativbewegung des Innenrings.

Aufgabe der Erfindung ist es, einen Leitschaufelkranz für eine Strömungsmaschine zu schaffen, der die vorgenannten Nachteile beseitigt und bei einer kompakten Bauweise des Innenrings einen wirksamen Schutz vor einer Desintegration bei einer großen axialen Relativbewegung eines Innenrings zur Leitschaufelreihe bietet. Zudem ist es Aufgabe der Erfindung, eine Strömungsmaschine zu schaffen, die eine hohe Sicherheit gegen eine derartige Desintegration bietet.

Diese Aufgabe wird gelöst durch einen Leitschaufelkranz mit den Merkmalen des Patentanspruchs 1 und durch eine Strömungsmaschine mit den Merkmalen des Patentanspruchs 8.

Ein erfindungsgemäßer Leitschaufelkranz für eine Strömungsmaschine hat eine Vielzahl von verdrehbaren Leitschaufeln, die radial außen in radialer Richtung gelagert sind, und einen Innenring zum radial inneren Stabilisieren der Leitschaufeln. Erfindungsgemäß haben die Leitschaufeln jeweils einen inneren Plattformteller, mittels dessen Mantelfläche sie in einer Aufnahme des Innenrings gleitend geführt sind. Von den Plattformtellern erstreckt sich jeweils radial nach innen ein Zapfen, der eine minimale Länge hat, die größer als eine minimale Tiefe der Aufnahme ist, und der ohne axialen Relativversatz zwischen dem Innenring und den Leitschaufeln berührungslos in einer Zapfenbohrung angeordnet ist, die einen Bodenabschnitt der jeweiligen Aufnahme durchsetzt.

Erfindungsgemäß werden die Aufgaben der Plattformteller und die der Zapfen funktional getrennt. Die Plattformteller übernehmen mit ihrer großen Mantelfläche die Aufgabe der Lagerung der Schaufel im Innenring und einer damit verbundenen guten Abdichtung des Tellers gegen Leckage. Die Zapfen nehmen nicht an der Lagerfunktion teil und sind somit für die Aufgabe optimiert, bei großen axialen Auslenkungen des Innenrings z. B. beim Pumpen oder Vogelschlag, eine formschlüssigen Verbindung zwischen den Leitschaufeln und dem Innenring sicher zu stellen, die weniger Kräfte auf die Schaufel überträgt als eine konventionelle Lagerung. Kommt ein Plattformteller bei Fehlerfällen außer Eingriff mit seiner innenringseitigen Aufnahme, wird durch den Zapfen eine formschlüssige Verbindung von Schaufel zu Innenring sichergestellt. Zudem wird durch die funktionale Trennung eine kompakte Bauweise des Innenrings ermöglicht.

Bevorzugterweise sind die Plattformteller buchsenlos in den Aufnahmen geführt. Durch diese Maßnahme entfallen Lagerbuchsen, so dass zudem die Teileanzahl und hierdurch das Gewicht des Leitschaufelkranzes reduziert und seine Montage vereinfacht bzw. beschleunigt wird.

Zur Erzielung einer hohen Standzeit und einer reibungsarmen Führung der Leitschaufeln innenringseitig ist es vorteilhaft, wenn zumindest bei buchsenloser Lagerung zumindest die Mantelflächen mit einer entsprechenden Beschichtung versehen sind.

Die Zapfen können jeweils einen Radialbund haben, dessen Außendurchmesser größer als ein Innendurchmesser der Zapfenbohrungen ist. Durch diese Maßnahme wird verhindert, dass die Leitschaufeln und der Innenring bei einer unerwartet großen axialen Relativbewegung voneinander getrennt werden. Der jeweilige Radialbund ist insbesondere ein freier Endabschnitt der Zapfen.

Das Gewicht des Innenrings lässt sich an sich reduzieren, wenn ein Innenringbereich radial innen zu den Aufnahmen hohlraumartig ausgebildet ist.

Aus Montagründen kann der Innenring zwei axial getrennte Ringsegmente aufweisen, die zusammen den Innenring bilden. Die Ringsegmente können zur weiteren Vereinfachung der Montage in zwei bzw. in eine obere und eine untere Ringsegmentenhälfte unterteilt sein. Die Ringsegmente haben eine Vielzahl von Hohlräumen, wobei in zumindest einigen Trennwänden, die die Hohlräume in Umfangsrichtung voneinander trennen, Aufnahmen zum Zusammenwirken mit Verbindungsmitteln eingebracht sind. Hierdurch wird eine Verformung der Ringsegmente beim Fügen verhindert, da sich im Bereich der Verbindungsmittel keine Hohlräume befinden, sondern der Innenring nur Vollquerschnitte aufweist.

Um einen Gaseinzug in die Hohlräume zu verhindern, ist es vorteilhaft, wenn diese radial innen verschlossen sind. Hierzu kann das eine Ringsegment einen Axialvorsprung haben, der mit dem anderen Ringsegment einen Kontaktbereich bildet.

Eine erfindungsgemäße Strömungsmaschine hat zumindest einen erfindungsgemäßen Leitschaufelkranz. Sie zeichnet sich hierdurch durch ein reduzierte Leckagestelle im Bereich des Leitschaufelkranzes, eine geringeres Gewicht und eine hohe Sicherheit gegen ein Desintegrieren von den Plattformtellern und dem Innenring aufgrund von axialen Relativbewegungen zwischen dem Leitschaufelkranz und dem Innenring im Vergleich zu Strömungsmaschinen mit bekannten Leitschaufelkränzen aus.

Sonstige vorteilhafte Ausführungsbeispiele sind Gegenstand weiterer Unteransprüche.

Im Folgenden wird ein bevorzugtes Ausführungsbeispiel der Erfindung anhand stark vereinfachter schematischer Darstellungen näher erläutert. Es zeigen:
- Figur 1: einen Axialschnitt durch einen radial inneren Bereich eines erfindungsgemäßen Leitschaufelkranzes ohne axialer Relativverschiebung seines Innenrings,
- Figur 2: einen Axialschnitt durch den radial inneren Bereich des erfindungsgemäßen Leitschaufelkranzes mit axialer Relativverschiebung seines Innenrings, und
- Figur 3: einen Schnitt durch einen Bereich eines Ringsegment des Leitschaufelkranz entlang der Linie AA aus Figur 1.

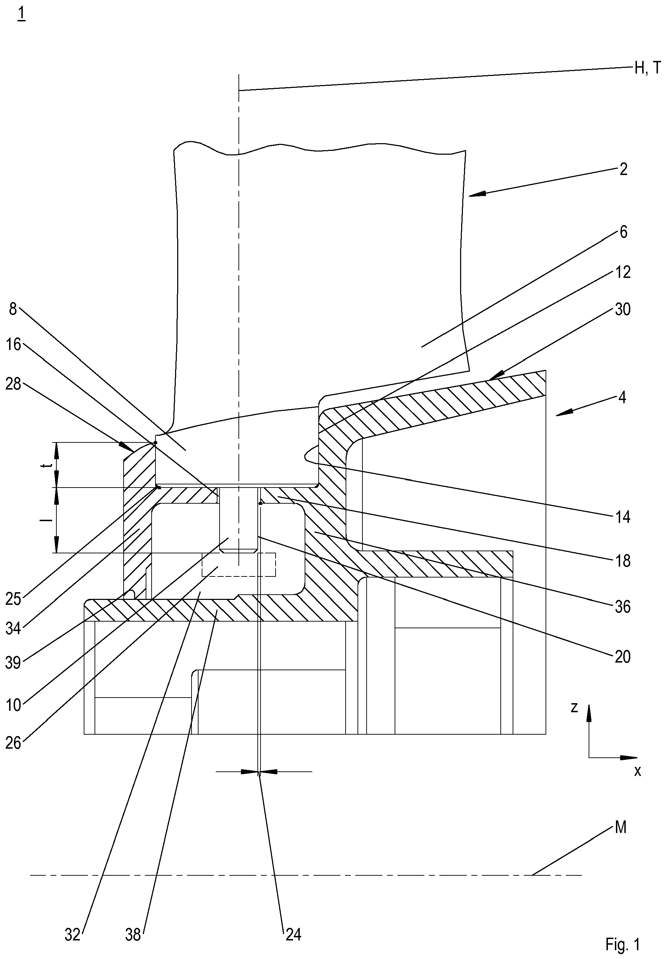

In Figur 1 ist ein Axialschnitt durch einen bezogen auf seine Mittelachse M radial inneren Bereich eines erfindungsgemäßen Leitschaufelkranzes 1 einer Strömungsmaschine wie ein Flugzeugtriebwerk und dergleichen gezeigt. Die Mittelachse M ist gleich einer Maschinenlängsachse bzw. Rotordrehachse der Strömungsmaschine. Im montierten Zustand umgreift der Leitschaufelkranz 1 einen nicht gezeigten verdichterseitigen und insbesondere einlassseitigen Abschnitt eines Rotors der Strömungsmaschine.

Der Leitschaufelkranz 1 hat im Wesentlichen eine Vielzahl von Leitschaufeln 2 und einen Innenring 4. Die Leitschaufeln 2 sind um ihre sich in Radialrichtung z erstreckende Schaufelachse bzw. Hauptachse H verstellbar und haben jeweils ein Schaufelblatt 6 und einen inneren Schaufelteller bzw. Plattformteller 8 mit kreisrundem Querschnitt. Entgegengesetzt zu den Schaufelblättern 6 erstreckt sich von den Plattformtellern 8 radial nach innen jeweils ein im Folgenden noch erläuterter Zapfen 10.

Zudem haben die Leitschaufeln 2 jeweils einen, bezogen auf die Mittelachse M, nicht gezeigten radial äußeren Schaufelteller sowie einen sich von dem äußeren Schaufelteller radial nach außen erstreckenden Verstellzapfen, mittels dem sie jeweils mit einer gehäuseseitigen Verstelleinrichtung zum Verschwenken um ihre Hauptachse H zusammenwirken. Die Leitschaufeln 2 sind über ihre Verstellzapfen radial außen in Radialrichtung gelagert und somit speichenzentriert. Der Innenring 4 dient zur inneren Stabilisierung der Leitschaufeln 2.

Die Leitschaufeln 2 sind über ihre Plattformteller 8 und insbesondere über deren zylinderförmigen Mantelflächen 12 in Aufnahmen 14 des Innenrings 4 radial innen stabilisiert. Zur Reibungsreduzierung und Erhöhung der Standzeit sind die Mantelflächen 12 und/oder die Aufnahmen 14 innenumfangsseitig mit einer entsprechenden Beschichtung versehen.

Die Zapfen 10 dienen zur Sicherung der formschlüssigen Verbindung Leitschaufeln-Innenring 2, 4 bzw. zur Verhinderung einer Desintegration im Falle einer großen axialen Bewegung des Innenrings 4 relativ zu den Leitschaufeln 2. Die Zapfen 10 haben eine zylindrische Gestalt und durchsetzen jeweils eine Zapfenbohrung 16, die in einen zentralen Bodenabschnitt 18 der Aufnahmen 14 eingebracht ist. Die Zapfen 10 sind seitlich berührungslos in den Zapfenbohrungen 16 aufgenommen. Hierzu ist ihr Außendurchmesser derart kleiner als ein Innendurchmesser der Zapfenbohrungen 16 gesetzt, so dass die Leitschaufeln 2, wenn die Leitschaufeln 2 über ihre Plattformteller 8 in dem Innenring 4 stabilisiert sind, zwischen Außenumfangsflächen 20 der Zapfen 10 und nicht bezifferten Innenumfangsflächen der Zapfenbohrungen 16 ein Ringspalt 24 gebildet ist. Zudem haben die Zapfen 10 eine minimale Länge 1, die größer ist als eine minimale Tiefe t der Aufnahmen 18.

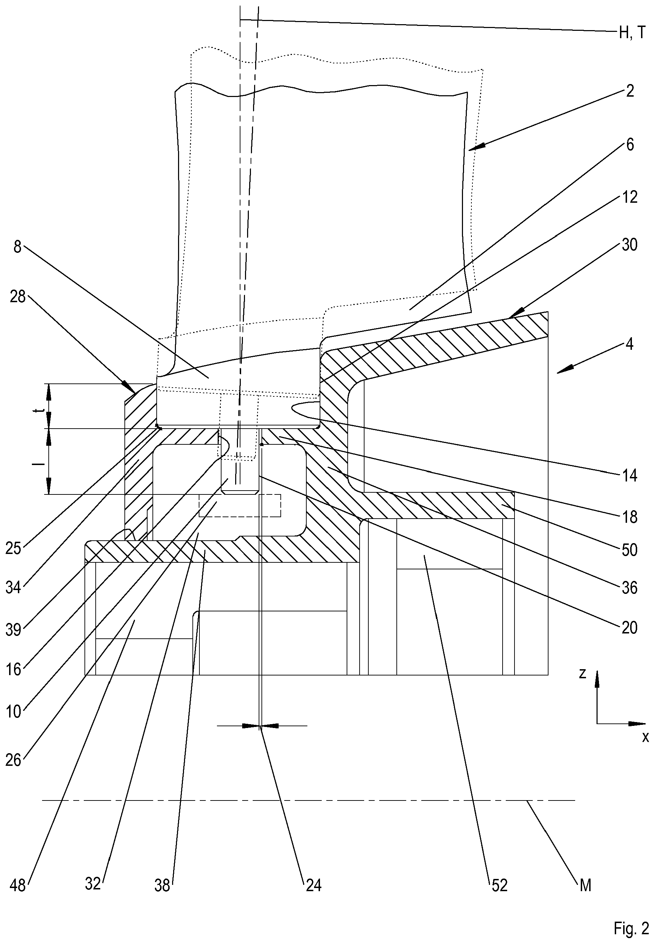

Die Wirkweise der Erfindung bei einer axialen Relativbewegung des Innenrings 4 zu den Leitschaufeln 2 zur Verhinderung einer Desintegration ist in Figur 2 verdeutlicht: Bei einer großen axialen Relativverschiebung des Innenrings 4 zu den Leitschaufeln 2, beispielsweise als Folge eines Pumpvorgangs, kann die jeweilige Leitschaufel 2 mit ihrem Plattformteller 8 aus der Aufnahme 14 gehoben werden und somit der Formschluss zwischen dem Plattformteller 8 und dem Innenring 4 aufgehoben werden. Durch den jeweiligen Zapfen 10 wird jedoch ein vollständiges Aufheben des Formschlusses zwischen der Leitschaufel 2 und des Innenrings 4 zu verhindern, da sich dieser aufgrund seiner größeren minimalen Länge 1 im Vergleich zum minimalen Tiefe t der Aufnahme 14 nun im formschlüssigen Eingriff mit seiner Zapfenbohrung 16 befindet. Nachdem der Pumpvorgang beendet ist, wird der Plattformteller 8 der jeweiligen Leitschaufel 2 und somit die jeweilige Leitschaufel 2 über den Formschluss des Zapfens 10 mit der Zapfenbohrung 16 zurück in die Aufnahme eingeführt und die radial innere Stabilisierung der Leitschaufeln 2 erfolgt wieder ausschließlich über die Plattformteller 8. Zur vereinfachten Einführung können zumindest die Plattformteller 8 an ihren radial inneren Ringkante mit einer umlaufenden Schrägfläche 25 versehen sein.

Um auch bei einer unerwartet großen axialen Relativbewegung des Innenrings 4 zu den Leitschaufeln 2, eine Desintegration zu verhindern, können die Zapfen 10 jeweils einen gestrichelt angedeuteten Radialbund 26 haben. Dieser ist vorzugsweise am freien Endabschnitt der Zapfen 10 ausgebildet und hat einen Außendurchmesser, der größer als der Innendurchmesser der Zapfenbohrungen 16 ist. Bei einer unerwartet großen relativen Axialbewegung läuft der jeweilige Radialbund 26 auf den Bodenabschnitt 18 auf und verhindert somit eine weitere axiale Verschiebung des Innenrings 4 zur jeweiligen Leitschaufel 2.

Der Innenring 4 besteht aus zwei Ringsegmenten 28, 30, die entlang einer axialen Trennebene T zusammengesetzt sind. Die Ringsegmente 28, 30 sind hier wiederrum in zwei Ringsegmentenhälften unterteilt. In Strömungsrichtung x eines die Strömungsmaschine durchströmenden Primärstroms hat der Innenring 4 ein vorderes Ringsegment 28 und ein hinteres Ringsegment 30, die jeweils eine obere Ringsementenhälfte und eine untere Ringsegmentenhälfte aufweisen. Selbstverständlich sind auch andere Teilungen der Ringsegmente 28, 30 wie Dreiteilungen, Vierteilungen und dergleichen möglich

Das vordere und das hintere Ringsegment 28, 30 bilden jeweils eine Hälfte der Aufnahmen 14 und eine Hälfte der Zapfenbohrungen 16 aus. Somit liegen die Hochachsen H der Leitschaufeln 2 in der Trennebene T. Sie sind über nicht gezeigte Verbindungsmittel wie Schrauben miteinander verbunden. Im miteinander verbundenen bzw. im gefügten Zustand weisen sie eine Vielzahl von Hohlräumen 32 aus. Der Innenring 4 ist quasi hohlraumartig bzw. ein Hohlprofil.

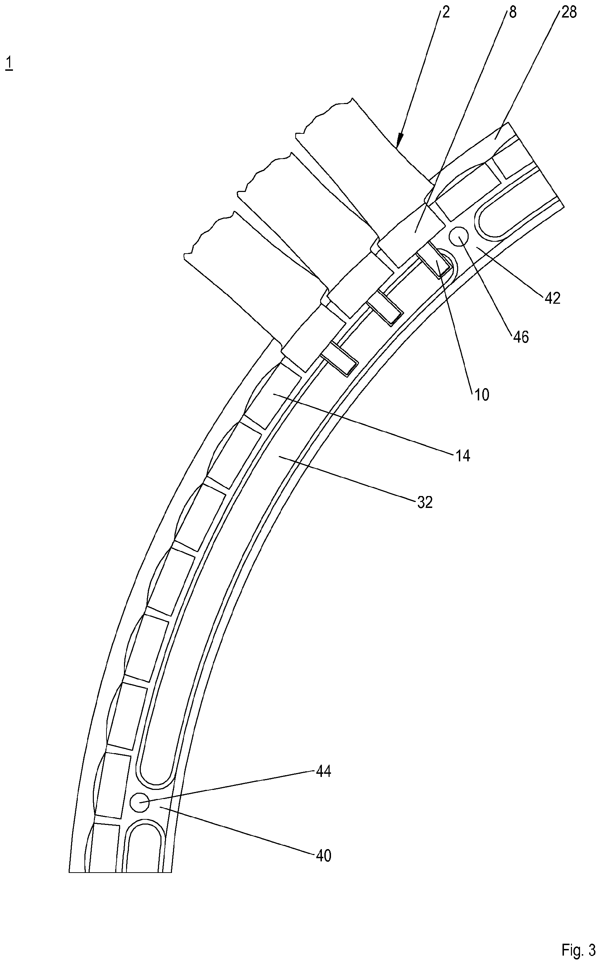

Die Hohlräume 32 sind axial durch gegenüberliegende Radialwandungen 34, 36 der Ringsegmente 28, 30 begrenzt. Radial außen sind die Hohlräume 32 durch die Bodenabschnitt 18 der Aufnahmen 14 und durch sich zwischen den Bodenabschnitten 18 nicht gezeigte erstreckende Umfangsabschnitte der Ringsegmente 28, 30 begrenzt. Radial innen sind die Hohlräume 32 durch einen vorderen Axialvorsprung 38 des hinteren Ringsegments 30 begrenzt. Der vordere Axialvorsprung 38 erstreckt sich von der Radialwandung 36 des hinteren Ringsegments 30 in Richtung der Radialwandung 34 des vorderen Ringsegments 28 und über diese hinaus, wobei zwischen dem vorderen Axialvorsprung 38 und der vorderen Radialwandung 34 ein ringförmiger Kontaktbereich 39 gebildet ist. In Umfangsrichtung sind die Hohlräume 32, wie in Figur 3 gezeigt, über Trennwände 40, 42 begrenzt bzw. voneinander getrennt.

Wie zudem in Figur 3 gezeigt, erstrecken sich die Hohlräume 32 über mehrere Aufnahmen 14. In den Trennwänden 40, 42 können dabei Durchführungen 44, 46 zur Aufnahme der Verbindungselemente eingebracht sein, so dass die Ringsegmente 28, 30 im Bereich ihrer Verbindungsstellen Vollquerschnitte aufweisen. Hierdurch werden Verformungen des Innenrings 4 bei der Montage verhindert.

Wie ferner in Figur 2 gezeigt, sind an dem vorderen Axialvorsprung 38 des hinteren Ringsegments 36 innenumfangsseitig Dichtungselemente 48 zum Zusammenwirken mit nicht gezeigten gegenüberliegenden rotorseitigen Dichtstegen angeordnet. Zudem hat das hintere Ringsegment 36 einen hinteren Axialvorsprung 50, der sich radial innen zum vorderen Axialvorsprung 38 und entgegengesetzt zu diesem von dem hinteren Ringsegment 36 erstreckt und ebenfalls innenumfangsseitig mit Dichtelementen 52 zum Zusammenwirken mit gegenüberliegenden nicht gezeigten rotorseitigen Dichtstegen versehen ist.

Offenbart ist ein Leitschaufelkranz für eine Strömungsmaschine, bei dem eine Schaufellagerung im Innenring über deren Plattformtellern erfolgt und eine Desintegrationssicherung über Zapfen erfolgt, die sich radial innen von den Plattformtellern erstrecken, sowie eine Strömungsmaschine.

### Bezugszeichenliste

- 1: Leitschaufelkranz
- 2: Leitschaufeln
- 4: Innenring
- 6: Schaufelblatt
- 8: Plattformteller
- 10: Zapfen
- 12: Mantelfläche
- 14: Aufnahme
- 16: Zapfenbohrung
- 18: Bodenabschnitt
- 20: Außenumfangsfläche
- 24: Ringspalt
- 25: Schrägfläche
- 26: Radialbund
- 28: vorderes Ringsegment
- 30: hinteres Ringsegment
- 32: Hohlraum
- 34: vordere Radialwandung
- 36: hintere Radialwandung
- 38: vorderer Axialvorsprung
- 39: Axialvorsprung
- 40: Trennwand
- 42: Trennwand
- 44: Durchführung / Aufnahme
- 46: Durchführung / Aufnahme
- 48: Dichtelement
- 50: hinterer Axialvorsprung
- 52: Dichtelement
- H: Hauptachse/Schaufelachse
- M: Maschinenlängsachse
- T: axiale Trennebene
- 1: Länge
- t: Tiefe
- x: Strömungsrichtung
- z: Radialrichtung

## Patentansprüche

1. Montierter Leitschaufelkranz (1) für eine Strömungsmaschine, mit einer Vielzahl von verdrehbaren Leitschaufeln (2), die bezogen auf eine Mittelachse (M) des Leitschaufelkranzes (1) radial außen in radialer Richtung gelagert sind, und mit einem Innenring (4) zum radial inneren Stabilisieren der Leitschaufeln (2), **dadurch gekennzeichnet, dass** die Leitschaufeln (2) jeweils einen inneren Plattformteller (8) haben, mittels dessen Mantelfläche (12) sie in einer Aufnahme (14) des Innenrings (4) gleitend geführt sind, wobei sich von dem Plattformtellern (8) bezogen auf die Mittelachse (M) radial nach innen jeweils ein Zapfen (10) erstreckt, der eine minimale Länge (1) hat, die größer als eine minimale Tiefe (t) der Aufnahme (14) ist, und der ohne axialen Relativversatz zwischen dem Innenring (4) und den Leitschaufeln (2) berührungslos in einer Zapfenbohrung (16) angeordnet ist, die einen Bodenabschnitt (18) der jeweiligen Aufnahme (14) durchsetzt.

2. Leitschaufelkranz nach Patentanspruch 1, wobei die Plattformteller (8) buchsenlos in den Aufnahmen (14) geführt sind.

3. Leitschaufelkranz nach Patentanspruch 2, wobei die Mantelflächen (12) beschichtet sind.

4. Leitschaufelkranz nach einem der vorhergehenden Patentansprüche, wobei die Zapfen (10) jeweils einen Radialbund (26) haben, dessen Außendurchmesser größer als ein Innendurchmesser der Zapfenbohrungen (16) ist.

5. Leitschaufelkranz nach einem der vorhergehenden Patentansprüche, wobei ein Innenringbereich radial innen zu den Aufnahmen (14) hohlraumartig ausgebildet ist.

6. Leitschaufelkranz nach Patentanspruch 5, wobei der Innenring zwei axial getrennte Ringsegmente (28, 30) aufweist und eine Vielzahl von Hohlräumen (32) vorgesehen ist, wobei in zumindest einigen Trennwänden (40, 42), die die Hohlräume (32) in Umfangsrichtung voneinander trennen, Aufnahmen (44, 46) zum Zusammenwirken mit Verbindungsmitteln eingebracht sind.

7. Leitschaufelkranz nach Patentanspruch 5 oder 6, wobei das eine Ringsegment (28, 30) einen radial innen Axialvorsprung (38) hat, der mit dem anderen Ringsegment (28, 30) einen Kontaktbereich bildet.

8. Strömungsmaschine mit einem Leitschaufelkranz (1) nach einem der vorhergehenden Patentansprüche.

## Claims

1. Mounted vane ring (1) for a turbomachine, comprising a plurality of rotatable guide vanes (2) which are mounted radially outwards in the radial direction in relation to a central axis (M) of the mounted vane ring (1), and comprising an inner race (4) for radially inwardly stabilizing the guide vanes (2), **characterized in that** the guide vanes (2) each have an inner platform plate (8), by means of the lateral face (12) of which said platform plates are slidingly guided into a seat (14) in the inner race (4), a pin (10) extending in each case from the platform plate (8) radially inwards in relation to a central axis (M), which pin has a minimum length (I) which is greater than a minimum depth (t) of the seat (14), and which is arranged contactlessly in a pin bore (16) without relative axial offset between the inner race (4) and the guide vanes (2), which pin bore passes through a base portion (18) of the particular seat (14).

2. Vane ring according to claim 1, wherein the platform plates (8) are guided into the seats (14) in a linerless manner.

3. Vane ring according to claim 2, wherein the lateral faces (12) are coated.

4. Vane ring according to any of the preceding claims, wherein the pins (10) each have a radial collar (26) of which the outer diameter is greater than an inner diameter of the pin bores (16).

5. Vane ring according to any of the preceding claims, wherein an inner race region is formed radially inwardly in relation to the seats (14), in the manner of a cavity.

6. Vane ring according to claim 5, wherein the inner race comprises two axially separated race segments (28, 30) and is provided with a plurality of cavities (32), wherein, in at least some separating walls (40, 42) which separate the cavities (32) from one another in the circumferential direction, receiving portions (44, 46) for interacting with connecting means are introduced.

7. Vane ring according to either claim 5 or claim 6, wherein one of the race segments (28, 30) has a radial inwards axial projection (38) which forms a contact region with the other race segment (28, 30).

8. Turbomachine comprising a vane ring (1) according to any of the preceding claims.

## Revendications

1. Couronne à aubes directrices (1) assemblée, destinée à une turbomachine, comprenant une pluralité d'aubes directrices rotatives (2), qui sont montées radialement à l'extérieur dans la direction radiale par rapport à un axe central (M) de la couronne à aubes directrices (1), et un anneau intérieur (4) destiné à la stabilisation radialement intérieure des aubes directrices (2), **caractérisée en ce que** les aubes directrices (2) comportent chacune une embase discoïdale intérieure (8) dont la surface latérale (12) permet de guider celles-ci de manière coulissante dans un logement (14) de l'anneau intérieur (4), un téton (10) s'étendant depuis chacune des embases discoïdales (8) radialement vers l'intérieur par rapport à l'axe central (M), lequel téton ayant une longueur minimale (1) supérieure à une profondeur minimale (t) du logement (14) et étant disposé dans un alésage de téton (16) sans contact et sans décalage relatif axial entre l'anneau intérieur (4) et les aubes directrices (2), lequel alésage de téton étant ménagé à travers une partie de fond (18) du logement (14) respectif.

2. Couronne à aubes directrices selon la revendication 1, dans laquelle les embases discoïdales (8) sont guidées sans douille dans les logements (14).

3. Couronne à aubes directrices selon la revendication 2, dans laquelle les surfaces latérales (12) sont pourvues d'un revêtement.

4. Couronne à aubes directrices selon l'une des revendications précédentes, dans laquelle les tétons (10) comportent chacun une collerette radiale (26) dont le diamètre extérieur est supérieur à un diamètre intérieur des alésages de téton (16).

5. Couronne à aubes directrices selon l'une des revendications précédentes, dans laquelle une zone de l'anneau intérieur est conçue en forme de cavité radialement à l'intérieur par rapport aux logements (14).

6. Couronne à aubes directrices selon la revendication 5, dans laquelle l'anneau intérieur comporte deux segments d'anneau (28, 30) séparés axialement et dans laquelle il est prévu une pluralité de cavités (32), des logements (44, 46) destinés à coopérer avec des moyens de liaison étant ménagés dans au moins certaines des parois de séparation (40, 42) qui séparent les cavités (32) les unes des autres dans la direction circonférentielle.

7. Couronne à aubes directrices selon la revendication 5 ou 6, dans laquelle l'un des segments d'anneau (28, 30) comporte une saillie axiale (38) radialement intérieure qui forme avec l'autre segment d'anneau (28, 30) une zone de contact.

8. Turbomachine comportant une couronne à aubes directrices (1) selon l'une des revendications précédentes.
